Europäisches Patentamt

European Patent Office

Office européen des brevets

(11) Publication number: **0 113 189**
**B1**

# EUROPEAN PATENT SPECIFICATION

(45) Date of publication of patent specification: **20.01.88**

(51) Int. Cl.⁴: **C 09 D 11/00, C 09 D 1/02**

(21) Application number: **83307286.1**

(22) Date of filing: **30.11.83**

(54) **Method of marking hot metal products.**

(30) Priority: **01.12.82 US 445790**

(43) Date of publication of application:
**11.07.84 Bulletin 84/28**

(45) Publication of the grant of the patent:
**20.01.88 Bulletin 88/03**

(84) Designated Contracting States:
**AT BE CH DE FR GB IT LI LU NL SE**

(56) References cited:
**AU-B- 2 186**
**US-A-3 732 115**

(73) Proprietor: **USS ENGINEERS AND CONSULTANTS, INC.**
**600 Grant Street**
**Pittsburgh Pennsylvania 15230 (US)**

(72) Inventor: **Perfetti, Bruno Massimo**
**311 Margaret Street**
**Jeanette Pennsylvania 15644 (US)**

(74) Representative: **Shipton, Gordon Owen et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to the application of a composition to hot metal products for marking purposes.

There is need in the steel industry for marking inks which can be used to identify hot slabs and billets and will withstand surface temperatures exceeding 1600°F (871°C). Inks currently used bubble badly when applied on surfaces which are above 1600°F (871°C) and do not adhere when the surfaces cool to ambient temperatures. An ink currently used is disclosed in US—A—3,640,737, and 3,732,115. These compositions will not work above 1600°F (871°C) and certainly not at 2000°F (1093°C) which is of immediate interest for marking hot steel mill products.

AU—B—2186/66 discloses that, for temperatures of up to about 950°F (510°C), one can use a composition containing alkali metal silicate, pigment and borate to produce a well adhered coating of granules. The application to granules involves the use of a composition in which a heat reactive clay must be present.

According to the present invention there is provided a method of producing a legible marking on a metal product comprising applying a composition comprising solids of 30 to 50 parts by weight pigment, 43 to 58 parts by weight of water soluble alkali metal silicate binder, at least 50 percent by weight of said alkali metal silicate being sodium silicate, the weight ratio of silica to alkali metal oxide in said alkali metal silicate being 2.60 to 3.25, and a cross-linking binder selected from borax, boric oxide, sodium metaborate, barium metaborate, and mixtures thereof in sufficient amounts to provide 1.5 to 5.0 parts by weight of $B_2O_3$, the ratio of total pigment to total binder solids being 0.50 to 1.0, said solids being suspended in an amount of water to give said composition a viscosity of 800 to 5000 milliPascal second (centipoise) to a surface of said metal product which is at a temperature in the range of 982 to 1371°C (1800 to 2500°F), preferably 982 to 1204°C (1800 to 2200°F), in a manner to produce a legible marking thereon.

The composition may be produced by a process which comprises providing a first alkali metal silicate solution having a ratio of silica to alkali metal oxide of 2.0 to 2.8, providing a second alkali metal-silicate solution having a ratio of silica to alkali metal oxide of 3.0 to 3.9, mixing sufficient portions of the first and second solutions to provide a third solution having a ratio of silica to alkali metal oxide of 2.60 to 3.25, adding a cross-linking binder to at least one of the three alkali metal silicate solutions, adding pigment to the third solution and then adding water to adjust viscosity as necessary and produce a mixture having the composition as defined hereinabove.

The alkali metal silicate, preferably 90 percent of which is sodium silicate, may include potassium silicates, quaternary ammonium silicates and lithium silicates. Use of potassium silicate or alkali metal silicates other than sodium silicate in amounts greater than 50 percent significantly increase viscosity and are undesirable. (The effect of potassium silicate on viscosity is shown by Sample No. 9 in Table II hereinbelow).

Silica-to-alkali metal oxide ratios above 3.25 significantly decrease adherence of the composition when applied to a hot surface i.e. at 2000°F (1093°C). The applied coating becomes powdery and friable and tends to scrape off. Material having a ratio below 2.60 does not have sufficient thermal resistance for high temperature use and flows too readily leaving an illegible mark.

Preferably the pigment is titanium dioxide, zirconium oxide, a chromium oxide, or mixtures thereof of which 6 to 12 parts by weight may be replaced on a one-to-one basis by an extender pigment selected from aluminium silicates, barium silicates, calcium silicates, magnesium silicates, zirconium silicates, magnesium aluminium silicates, mica, wollastonite, barytes, kaolin, whitings, and mixtures thereof.

Pigment to binder ratios above 1.0 significantly reduce adherence of material applied to hot surfaces. Ratios below 0.50 result in marks having very poor visibility because of low pigment content. The pigment to binder ratio is preferably 0.70 to 0.90, more preferably 0.55 to 0.85. Pigment to binder ratio is defined as the weight of inert pigments in the composition divided by the sum of alkali metal silicate solids and cross-linking binder solids (i.e. total weight of borax and other borate constituents).

In addition to the above-mentioned ranges of alkali-metal silicate and pigment materials, the amount of cross-linking binder has been found to be critical. $B_2O_3$ contents below 1.5% by weight of total solids do not produce an ink suitable for application at temperatures above 1800°F (982°C). Thus, a $B_2O_3$ content of at least 1.5% is essential for the composition used in the present invention. The maximum $B_2O_3$ is about 5.0 percent. In excess of this amount, the material becomes subject to gelation and poor storage stability.

The water content of the material is adjusted so as to comprise usually about 42 to 57 percent by weight of the final composition. This produces a material having viscosity from 800 to 5000 milliPascal second (centipoise) which is suitable for spray application. At viscosities lower than 800 milliPascal second (centipoise) the material will not have adequate anti-settling characteristics. On the other hand, at viscosities over 5000 milliPascal second (centipoise) it is difficult to atomize and spray the material. Desirably, the water content is adjusted so as to obtain viscosity between 1000 to 3000 milliPascal second (centipoise) for the best combination of anti-settling and spraying properties.

Examples illustrating the invention are shown in Tables I and II. The ingredients for each sample were added and combined in a high-shear mixer in the order listed from the top to bottom of the left-hand column in Table I. The upper portion of Table II shows a breakdown of the various ingredients as a fraction of total solids expressed in percentage by weight. The lower portion of Table II shows various relationships

2

of the materials in each sample, namely the percent solids, the ratio of soluble silica-to-alkali metal oxide, and the pigment to binder ratio.

Table II also shows the viscosity for each sample as determined by Brookfield Viscometer in accordance with the procedure set forth in ASTM D2196—81. Viscosity measurements were made on each sample at 77°F (25°C) using a No. 3 spindle at a speed of 20 rpm. Stencil numerals from each sample were applied to steel panels which had a surface temperature of 2000°F (1093°C). Following stencilling, the panels were air-cooled to about 900°F/1000°F (482/538°C) and then quenched in cold water. After air drying the stencil marks were vigorously scraped with a spatula. A mark for each sample was then rated for adherence and visibility. The results of the ratings are shown in Table II.

TABLE I
Parts by weight

| Ingredient | Sample No. | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Sodium silicate solution (A) 31.9% solids $SiO_2/Na_2O=3.85$ | 49.9 | 53.3 | 46.5 | 44.1 | 42.6 | 42.6 | — | — | — | — | 41.0 | 39.8 | — |
| (B) 44.1% solids $SiO_2/Na_2O=2.00$ | 20.2 | 14.8 | 24.0 | 32.0 | 31.0 | 31.0 | | 31.6 | | 30.6 | 29.9 | 28.9 | 31.8 |
| (C) 41.2% solids $SiO_2/Na_2O=3.00$ | — | — | — | — | — | — | 65.9 | — | — | — | — | — | — |
| (D) 32.0% solids $SiO_2/Na_2O=3.75$ | — | — | — | — | — | — | — | 43.5 | 37.0 | 42.1 | — | — | 43.8 |
| Potassium silicate solution 38.8% solids $SiO_2/K_2O=2.10$ | — | — | — | — | — | — | — | — | 27.0 | — | — | — | — |
| Borax | 2.2 | 2.3 | 3.5 | 3.3 | 6.5 | 3.2 | 3.2 | — | 2.8 | — | 3.1 | 3.0 | — |
| Boric oxide | — | — | — | — | — | — | — | 1.2 | — | — | — | — | 0.6 |
| Busan 11-M1,[1] | — | — | — | — | — | — | — | — | — | 4.4 | — | 4.8 | — |
| Kaolin | 4.5 | 4.8 | 4.2 | 4.0 | 3.9 | 5.2 | 5.2 | 5.3 | 4.5 | 5.1 | 5.0 | 4.9 | 5.3 |
| Titanium dioxide | 18.7 | 20.0 | 17.6 | 16.6 | 16.0 | 18.0 | 18.1 | 18.4 | 15.7 | 17.8 | 17.3 | 16.8 | 18.5 |
| Chromium sesquioxide | — | — | — | — | — | — | — | — | — | — | 3.7 | — | — |
| PVP/VA, S630[2] | — | — | — | — | — | — | — | — | — | — | — | 1.5 | — |
| CMC[3] | — | — | — | — | — | — | — | — | — | — | — | 0.3 | — |
| Water | 4.5 | 4.8 | 4.2 | | | | 7.6 | | 13.0 | — | — | — | — |

[1]Busan 11-M1, Buckman Laboratories, Inc. is 90% by weight Barium Metaborate.
[2]Polyvinyl Pyrrolidone/Vinyl Acetate Copolymer, GAF Corporation.
[3]Carboxymethyl Cellulose, Hercules, Inc.

0 113 189

TABLE II
Percentage by weight (of solids)

| Ingredient | Sample No. | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| $Na_2O \cdot SiO_2$ | 49.4 | 47.6 | 50.1 | 54.2 | 50.8 | 50.8 | 50.7 | 52.8 | 26.0 | 49.7 | 47.5 | 45.6 | 53.5 |
| $K_2O \cdot SiO_2$ | — | — | — | — | — | — | — | — | 23.2 | — | — | — | — |
| Borax | 4.4 | 4.5 | 6.9 | 6.3 | 12.1 | 6.0 | 6.0 | — | 6.2 | — | 5.6 | 5.4 | — |
| Barium metaborate | — | — | — | — | — | — | — | — | — | 8.1 | — | 7.7 | — |
| $(B_2O_3)$ | 1.6 | 1.7 | 2.6 | 2.3 | 4.5 | 1.9 | 2.2 | 2.3 | 2.2 | 2.1 | 2.0 | 4.1 | 1.1 |
| Kaolin | 9.0 | 9.5 | 8.3 | 7.7 | 7.3 | 9.7 | 9.7 | 10.1 | 9.9 | 9.4 | 9.0 | 8.8 | 10.2 |
| $TiO_2$ | 38.0 | 39.5 | 34.7 | 31.9 | 29.8 | 33.5 | 33.7 | 34.9 | 34.7 | 32.8 | 31.2 | 30.2 | 35.2 |
| $Cr_2O_3$ | — | — | — | — | — | — | — | — | — | — | 6.7 | — | — |
| PVP/VA, S630 | — | — | — | — | — | — | — | — | — | — | — | 2.7 | — |
| CMC | — | — | — | — | — | — | — | — | — | — | — | .5 | — |
| | | | | | | | | | | | | | |
| % Solids | 50.3 | 50.8 | 49.2 | 52.1 | 53.6 | 53.7 | 53.6 | 52.8 | 45.3 | 54.3 | 55.4 | 56.7 | 52.5 |
| Ratio soluble silica solids/alkali metal oxide solids | 2.97 | 3.17 | 2.86 | 2.70 | 2.70 | 2.70 | 3.00 | 2.68 | 2.79 | 2.68 | 2.72 | 2.70 | 2.68 |
| Pigment/binder ratio | 0.86 | 0.96 | 0.75 | 0.65 | 0.59 | 0.77 | 0.77 | 0.81 | 0.80 | 0.73 | 0.89 | 0.88 | 0.83 |
| Viscosity mPas (centipoise) | 1760 | 2900 | 1275 | 2200 | 2700 | 3000 | 3200 | 4420 | 6200 | 3300 | 3000 | 3900 | 3250 |
| Adherence % | 85/90 | 65/75 | 100 | 100 | 95* | 100 | 100 | 100 | 95** | 100 | 100 | 100 | 50/60 |
| Visibility | Good | Fair | Very Good | Good | Fair | Exc. | Exc. | Exc. | Good | Exc. | Exc. *** | Exc. **** | Good |

*Marks were bubbly causing some loss upon scraping.
**Spotty flaking and loss upon scraping. Difficult to spray because of high viscosity.
***Stable at prolonged exposure to temperature above 1800°F. (982°C).
****Mixture does not settle on standing. Marks resist softening at 90% relative humidity.

0 113 189

Table III shows examples of compositions within the scope of the invention prepared by concurrent mixing of the ingredients.

Example 14 was prepared using a single starting solution of sodium silicate. Example 15 was prepared using two starting solutions having a large difference in SiO$_2$/Na$_2$O ratio. For Example 16 two solutions were used but the difference in SiO$_2$/Na$_2$O ratio was not nearly as large as in Example 15.

TABLE III

| Ingredient | Example No. | Percent by weight | | |
|---|---|---|---|---|
| | | 14 | 15 | 16 |
| Sodium silicate solution | | | | |
| (D)  42.7% solids  SiO$_2$/Na$_2$O=2.88 | | 63.9 | — | — |
| (E)  31.9% solids  SiO$_2$/Na$_2$O=3.85 | | — | 48.6 | — |
| (F)  44.1% solids  SiO$_2$/Na$_2$O=2.00 | | — | 25.0 | — |
| (G)  41.2% solids  SiO$_2$/Na$_2$O=3.00 | | — | — | 32.9 |
| (H)  43.1% solids  SiO$_2$/Na$_2$O=2.8 | | — | — | 31.7 |
| Borax | | 3.2 | 3.7 | 3.3 |
| Kaolin | | 5.2 | 4.4 | 5.2 |
| Titanium dioxide | | 18.0 | 18.3 | 18.0 |
| Water | | 9.7 | — | 8.9 |
| | | 100.0 | 100.0 | 100.0 |

Table IV shows the viscosity and compositions of the samples listed in Table III. It is apparent that the material prepared from two starting solutions has significantly lower viscosity than that prepared from a single solution.

TABLE IV

| Ingredient | Example No. | Parts by weight (of solids) | | |
|---|---|---|---|---|
| | | 14 | 15 | 16 |
| Na$_2$O · SiO$_2$ | | 50.8 | 50.1 | 50.7 |
| Borax | | 6.0 | 7.0 | 6.1 |
| (B$_2$O$_3$) | | 2.2 | 2.6 | 2.2 |
| Kaolin | | 9.7 | 8.3 | 9.7 |
| Titanium dioxide | | 33.5 | 34.6 | 33.5 |
| % Solids | | 53.7 | 52.9 | 53.8 |
| Ratio soluble silica  solids/sodium oxide solids | | 2.88 | 2.86 | 2.92 |
| Pigment/binder ratio | | 0.76 | 0.76 | 0.76 |
| Viscosity mPas (centipoise) | | 4300 | 3500 | 3450 |

Example 17 was prepared to show the effect of mixing borax with a starting solution of high $SiO_2/Na_2O$ ratio prior to mixing with a low-ratio solution and addition of the balance of the ingredients.

In Example 18 the borax was first mixed with the low-ratio solution.

Finally, in Example 19 all the ingredients were mixed concurrently.

### Example 17

| Step 1 | Mix 3.2 grams of Borax with 45.6 grams Sodium Silicate Solution having 32.0% Solids and a $SiO_2/Na_2O$ ratio of 3.75. Hold for one hour at 160°F (71°C). |
|---|---|
| Step 2 | Add to the solution of Step 1, 30.4 grams Sodium Silicate Solution having 44.1% Solids and a $SiO_2/Na_2O$ ratio of 2.00. Hold for one hour at 160°F (71°C). |
| Step 3 | Add 5.3 grams Kaolin and 18.5 grams Titanium Dioxide. |

### Example 18

| Step 1 | Mix 3.2 grams of Borax with 30.4 grams Sodium Silicate Solution having 44.1% Solids and a $SiO_2/Na_2O$ ratio of 2.00. Hold for one hour at 160°F (71°C). |
|---|---|
| Step 2 | Add to the solution of Step 1, 45.6 grams Sodium Silicate Solution having 32.0% Solids and a $SiO_2/Na_2O$ ratio of 3.75. Hold for one hour at 160°F (71°C). |
| Step 3 | Add 5.3 grams Kaolin and 18.5 grams Titanium Dioxide. |

### Example 19

| Step 1 | Mix 3.2 grams Borax with 45.6 grams Sodium Silicate Solution having a 32.0% Solids and a $SiO_2/Na_2O$ ratio of 3.75 and 30.4 grams Sodium Silicate Solution having 44.1% Solids and a $SiO_2/Na_2O$ ratio of 2.00. Add 5.3 grams Kaolin and 18.5 grams Titanium Dioxide. Hold for two hours at 160°F (71°C). |
|---|---|

Table V shows that the lowest viscosity was obtained by concurrent mixing of the ingredients. Addition of the borax to the low-ratio solution also provides a somewhat lower viscosity than when it is added to the high-ratio solution first.

### TABLE V

| Ingredient | Example No. | Parts by weight (of solids) | | |
|---|---|---|---|---|
| | | 17 | 18 | 19 |
| $Na_2O \cdot SiO_2$ | | 50.9 | 50.9 | 50.9 |
| Borax | | 5.8 | 5.8 | 5.8 |
| $(B_2O_3)$ | | 2.2 | 2.2 | 2.2 |
| Kaolin | | 9.6 | 9.6 | 9.6 |
| $TiO_2$ | | 33.6 | 33.6 | 33.6 |
| % Solids | | 55.0 | 55.0 | 55.0 |
| Ratio soluble silica solids/sodium oxide solids | | 2.73 | 2.73 | 2.73 |
| Pigment/binder ratio | | 0.76 | 0.76 | 0.76 |
| Viscosity (mPas (Centipoise)) | | 2900 | 2400 | 2200 |

## Claims

1. A method of producing a legible marking on a hot metal product which comprises applying a composition comprising solids of 30 to 50 parts by weight of pigment, 43 to 58 parts by weight of water-soluble alkali metal silicate binder, at least 50 percent by weight of the alkali metal silicate being sodium silicate, the weight ratio of silica to alkali metal oxide in the alkali metal silicate being 2.60 to 3.25, and a cross-linking binder selected from borax, boric oxide, sodium metaborate, barium metaborate, and mixtures thereof in sufficient amounts to provide 1.5 to 5.0 parts by weight of $B_2O_3$, the ratio of total pigment to total binder solids being within the range 0.50 to 1.0, the solids being suspended in an amount of water to give the composition a viscosity of 800 to 5000 milliPascal second (centipoise) to a surface of the metal product which is at a temperature in the range of 982 to 1371°C (1800 to 2500°F) in a manner to produce a legible marking thereon.

2. A method according to claim 1 wherein the composition is applied to a surface of the metal product which is at a temperature in the range of 982 to 1204°C (1800 to 2200°F).

3. A method according to claim 1 or 2 wherein the pigment is titanium dioxide, zirconium oxide, a chromium oxide, or mixtures thereof of which 6 to 12 parts by weight may be replaced on a one-to-one basis by an extender pigment selected from aluminum silicates, barium silicates, calcium silicates, magnesium silicates, zirconium silicates, magnesium aluminum silicates, mica, wollastonite, barytes, kaolin, whitings, and mixtures thereof.

4. A method according to any of claims 1 to 3 wherein the composition is produced by a process which comprises providing a first alkali metal silicate solution having a ratio of silica to alkali metal oxide of 2.0 to 2.8, providing a second alkali metal-silicate solution having a ratio of silica to alkali metal oxide of 3.0 to 3.9, mixing sufficient portions of the first and second solutions to provide a third solution having a ratio of silica to alkali metal oxide of 2.60 to 3.25, adding a cross-linking binder to at least one of the three alkali metal silicate solutions, adding pigment to the third solution and then adding water to adjust viscosity as necessary and produce a mixture having a final composition as defined in claim 1.

5. A method according to claim 4 wherein the cross-linking binder is added to the first solution and the first solution is stabilized prior to mixing of the first and second solutions.

6. A method according to claim 5 wherein the cross-linking binder is added to the third solution and the steps of mixing the first and second solutions and adding the cross-linking binder are carried out concurrently.

## Patentansprüche

1. Verfahren zur Herstellung einer lesbaren Markierung auf einem glühenden Metallprodukt, umfassend das Auftragen einer Zusammensetzung, welche umfaßt Feststoffe von 30 bis 50 Gewichtsteilen Pigment, 43 bis 58 Gewichtsteilen wasserlösliches Alkalimetallsilicatbindemittel, wobei wenigstens 50 Gewichtsprozent des Alkalimetallsilicats Natriumsilicat sind, wobei das Gewichtsverhältnis von Siliciumdioxid zum Alkalimetalloxid im Alkalimetallsilicat 2,6 bis 3,25 beträgt, und ein vernetzendes Bindemittel ausgewählt aus Borax, Boroxid, Natriummetaborat, Bariummetaborat und Mischungen davon in ausreichenden Mengen, um 1,5 bis 5,0 Gewichtsteile $B_2O_3$ zu bieten, wobei das Verhältnis von gesamten Pigment zu gesamten Bindemittelfeststoffen im Bereich von 0,50 bis 1,0 liegt, wobei die Feststoffe in einer Menge Wasser suspendiert werden, so daß die Zusammensetzung eine Viskosität von 800 bis 5000 mPa s (Centipoise) hat, auf eine Oberfläche des Metallproduktes, das eine Temperatur im Bereich von 982 bis 1371°C (1800 bis 2500°F) hat, in einer Weise, daß eine lesbare Markierung darauf produziert wird.

2. Verfahren nach Anspruch 1, wobei die Zusammensetzung auf eine Oberfläche des Metallproduktes aufgebracht wird, die eine Temperatur im Bereich von 982 bis 1204°C (1800 bis 2200°F) hat.

3. Verfahren nach Anspruch 1 oder 2, wobei das Pigment Titandioxid, Zirkoniumoxid, ein Chromoxid oder Mischungen davon ist, von denen 6 bis 12 Gewichtsteile im Verhältnis eins zu eins durch ein Extenderpigment, ausgewählt aus Aluminiumsilicaten, Bariumsilicaten, Calciumsilicaten, Magnesiumsilicaten, Zirkoniumsilicaten, Magnesiumaluminiumsilicaten, Glimmer, Wollastonit, Baryt, Kaolin, Schlämmkreide und Mischungen davon, ersetzt werden können.

4. Verfahren nach einem der Ansprüche 1 bis 3, wobei die Zusammensetzung nach einem Verfahren hergestellt wird, welches umfaßt: Bereitstellen einer ersten Alkalimetallsilicatlösung mit einem Verhältnis von Siliciumdioxid zu Alkalimetalloxid von 2,0 bis 2,8, Bereitstellen einer zweiten Alkalimetallsilicatlösung mit einem Verhältnis von Siliciumdioxid zu Alkalimetalloxid von 3,0 bis 3,9, Mischen ausreichender Mengen der ersten und zweiten Lösung, um eine dritte Lösung mit einem Verhältnis von Siliciumdioxid zu Alkalimetalloxid von 2,60 bis 3,25 zu liefern, Zusetzen eines vernetzenden Bindemittels zu wenigstens einer der drei Alkalimetallsilicatlösungen, Zusetzen von Pigment zur dritten Lösung und Zusatz von Wasser, um die Viskosität wie notwendig einzustellen und eine Mischung zu produzieren, die die Endzusammensetzung hat, die im Anspruch 1, definiert wurde.

5. Verfahren nach Anspruch 4, wobei das vernetzende Bindemittel der ersten Lösung zugesetzt wird und die erste Lösung vor dem Mischen der ersten mit der zweiten Lösung stabilisiert wird.

6. Verfahren nach Anspruch 5, wobei das vernetzende Bindemittel der dritten Lösung zugesetzt wird und die Schritte des Mischens der ersten mit der zweiten Lösung und des Zusetzens des vernetzenden Bindemittels gleichzeitig ausgeführt werden.

## Revendications

1. Procédé de formation d'un marquage lisible sur un produit métallique chaud, qui comprend l'application d'une composition contenant des matières solides à raison de 30 à 50% en poids de pigment, 43 à 58 parties en poids d'un liant hydrosoluble de silicate alcalin, au moins 50% du silicate alcalin étant formé de silicate de sodium, le rapport pondéral de la silice à l'oxyde alcalin du silicate alcalin étant compris entre 2,60 et 3,25, et un liant de réticulation choisi parmi le borax, l'oxyde borique, le métaborate de sodium, le métaborate de baryum et leurs mélanges, en quantité suffisante pour que 1,5 à 5,0 parties en poids de $B_2O_3$ soient présentes, le rapport des matières solides totales du pigment aux matières solides totales du liant étant compris entre 0,50 et 1,0, les matières solides étant en suspension dans une quantité d'eau qui donne à la composition une viscosité comprise entre 800 et 5000 mPas (centipoise), sur une surface du produit métallique qui est à une température comprise entre 982 et 1371°C, de manière qu'un marquage lisible y soit formé.

2. Procédé selon la revendication 1, dans lequel la composition est appliqué sur une surface du produit métallique qui est à une température comprise entre 982 et 1204°C.

3. Procédé selon l'une des revendications 1 et 2, dans lequel le pigment est le bioxyde de titane, l'oxyde de zirconium, l'oxyde de chrome ou leurs mélanges sont 6 à 12 parties en poids peuvent être remplacées en quantités égales par un pigment diluant choisi parmi les silicates d'aluminium, les silicates de baryum, les silicates de calcium, les silicates de magnésium, les silicates de zirconium, les silicates d'aluminium et de magnésium, le mica, la wollastonite, les barytes, le kaolin, les blancs crayeux, et leurs mélanges.

4. Procédé selon l'une quelconque des revendications 1 à 3, dans lequel la composition est préparée par un procédé qui comprend la formation d'une première solution d'un silicate alcalin ayant un rapport de la silice à l'oxyde alcalin compris entre 2,0 et 2,8, la formation d'une seconde solution d'un silicate alcalin ayant un rapport de la silice à l'oxyde alcalin compris entre 3,0 et 3,9, le mélange de parties suffisantes de la première et de la seconde solution pour qu'elles forment une troisième solution ayant un rapport de silice à l'oxyde alcalin compris entre 2,60 et 3,25, l'addition d'un liant de réticulation à l'une au moins des trois solutions de silicate alcalin, l'addition d'un pigment à la troisième solution, puis l'addition d'eau de manière qu'elle règle la viscosité le cas échéant et forme un mélange ayant une composition finale telle que définie dans la revendication 1.

5. Procédé selon la revendication 4, dans lequel le liant de réticulation est ajouté à la première solution, et la première solution est stabilisée avant le mélange de la première et de la seconde solution.

6. Procédé selon la revendication 5, dans lequel le laint de réticulation est ajouté à la troisième, solution et les étapes de mélange de la première et de la seconde solution et d'addition du liant de réticulation sont réalisées simultanément.